# EUROPEAN PATENT APPLICATION

(11) **EP 2 404 856 A2**
(43) Date of publication of application: **11.01.2012**
(21) Application number: 11172656.8
(22) Date of filing: 05.07.2011
(51) Int. Cl.: B65H 75/24, B65H 75/30

(54) **Shaft extension, fiber web processing element, and method**

(30) Priority: 06.07.2010 FI 20105767
(71) Applicant: Metso Paper, Inc., 00130 Helsinki (FI)
(72) Inventor: Heinonen, Marko, 40320 Jyväskylä (FI)
(74) Representative: TBK

(57) **Abstract**

The invention relates to a shaft extension (30) for the shaft (3) of a fiber web processing element, where the shaft extension comprises a first end (31) for fastening to the shaft of the fiber web processing element and an opposite second end (32) for a rotating device of the fiber web processing element, and fastening accessories for fastening the shaft extension rigidly by the first end to the shaft in a manner which transmits the rotating torque. At the first end (31), the shaft extension (30) comprises a fastening element (34), which can be fitted with the shaft (3) of the fiber web processing element, within each other, so that the fastening element and the shaft of the fiber web processing element form a circular installation gap (33) between them, and the shaft extension comprises (30) the first adjustment pieces (40), which can be fitted in the installation gap, and the adjustment pieces can be adjusted jointly or individually in order to change the radial size of the installation gap locally at each adjustment piece so that the shaft extension can be adjusted to become concentric with the axis of rotation of the shaft of the fiber web processing element and so that the installation gap can be filled with a fixing agent (50) for joining the shaft extension and the shaft of the fiber web processing element together. The invention also relates to a fiber web processing element, to a method for the fastening of the shaft extension (30) to the shaft (3) of the fiber web processing element, and to a method for the fastening of a roll drive (10) to the end (2') of the fiber web processing element (1), such as a roll, by means of the shaft extension (30).

## Description

### FIELD OF INVENTION

The present invention relates to a shaft extension for the shaft of a fiber web processing element. Moreover, the invention relates to a fiber web processing element, to a method for the fastening of the shaft extension to the shaft of the fiber web processing element, and to a method for the fastening of a roll drive to the end of the fiber web processing element by means of the shaft extension. More particularly, but not limited to, the invention relates to the shaft extension of a roll of a fiber web machine or of a corresponding roll-like fiber web processing element, where the shaft extension can be arranged to be concentric with the axis of rotation of the drive shaft of the processing element and where the shaft extension can transmit the rotating torque to the roll in the drive system.

### BACKGROUND OF INVENTION

Rotating fiber web processing elements used in a fiber web machine, such as a paper, board, tissue or pulp machine, comprise for example rolls and rotating elements, which move fabrics and belts. A roll is typically supported to the unrotating frame structure by means of bearings installed on the rotating shafts at each end of the roll. The bearings installed on the shafts are typically mounted in bearing housings, which are fastened to the frame structure.

The prior art drive motor for a paper machine roll can be a permanent magnet motor equipped with a pipe shaft. The motor equipped with a pipe shaft is installed at the end of the shaft of the roll or between the bearing and roll frame so that the shaft carries the entire weight of the motor. The rotor and stator of the motor are mounted to each other with bearings in order to control the air gap between the rotor and stator, and the rotation of the stator part is prevented by means of a torque support.

It has been found that the entire drive motor begins to vibrate intensely during operation if there is a radial run-out at the end of the shaft or in the shaft. When renewing drive motors, an extension can be made in an existing shaft of a roll, and the motor is fastened to the extension. In this case, the joint between the shaft of the roll and the extension always causes eccentricity resulting from the manufacturing tolerance, and the eccentricity results in vibration during the operation of the roll. A motor frame, which is installed with bearings on a shaft end or extension that has a radial run-out and/or that is radially eccentric, and a stator fastened to the frame tend to vibrate during operation. The vibration may be transmitted directly to the fiber web manufacturing process via the roll, and the vibration may be transmitted to the fiber web manufacturing process via other rolls through the bearings of the rolls and the frame of the equipment. The vibrations disturb the fiber web manufacturing process and cause mechanical damage to the bearings, rolls and other components of fiber web manufacturing equipment such as frame structures.

It may be necessary to extend the shaft at the end of a roll by means of a shaft extension, for example for the installation of an electric motor, gear, drive device, drive pulley or corresponding roll rotating element.

In some cases, the shaft at the end of the roll or the rotating shaft of the gear connected to the roll is too short for the installation of a motor, which rotates the roll, to the shaft. In some cases, the surface of the shaft at the end of the roll is not sufficiently concentric with the axis of rotation of the roll in order to achieve sufficiently vibration-free operation.

One prior art solution for the extension of the shaft at the end of a roll is to change a new end to the roll, with the new end having a longer shaft than the original end. It is expensive to manufacture a new end, and the delivery time of a new end is long. Another prior art solution is to install a shaft extension on a shaft so that dimensionally accurate guide surfaces are machined on the shaft, and the new dimensionally accurate shaft extension can be installed to match these guide surfaces. The shaft extension can also be installed on an existing shaft by means of dimensionally accurate sleeves. In this case, the original shaft should have surfaces which are concentric with the rotation of the roll and which are of good surface quality. It is difficult to provide accurate machining on a roll which remains installed in a machine. The machining of the shaft of a roll usually requires that the roll is removed from the machine for the modification work. In rare cases, it is sufficient to remove the roll end from the roll shell in the machine hall, but the manufacture of a high-quality roll usually requires that the entire roll is taken to a workshop for machining. It may be necessary to carry out expensive internal or external machining on the original shaft in order to achieve a surface which is concentric with the rotating motion of the roll for the installation of extension parts such as sleeves. Moreover, the manufacture of dimensionally accurate extension parts and installation sleeves adds to the costs and to the time taken by the installation of the motor. Costs are also caused by the removal of the roll from the machine, installing the roll back into the machine, and, more generally, by the interruption of production.

The prior art method of installation of the shaft extension based on guide surfaces arranged in the original shaft and on counter surfaces fitted against these guide surfaces is inaccurate unless the guide surfaces are machined with great precision applying expensive methods. Despite this, the position of the shaft extension installed cannot be adjusted during installation, but the position is determined by the machining carried out, resulting in uncertainty concerning the achieved centering accuracy of the shaft extension.

Publication DE102005037647A1 presents a roll where a motor equipped with a pipe shaft is installed on the shaft of a roll. The publication presents different methods for fastening the motor to the shaft of the roll. One method of fastening is a fitting flange mounted on the shaft pipe, where the other end of the fitting flange is fastened around the shaft of the roll by means of a cylindrical interference fit. Another fastening method is to use a clamping element between the pipe shaft of the motor and the shaft, in which clamping element two split conical sleeves are tightened against each other. Yet another method of fastening is to tighten the fitting flange fastened on the pipe shaft of the motor against the cylindrical outer surface of the shaft of the roll by means hydraulic pressure.

### SUMMARY

According to a first aspect of the invention, the present invention provides a shaft extension for the shaft of a fiber web processing element, where the shaft extension comprises a first end for fastening to the shaft and an opposite second end for a rotating device of the fiber web processing element, and fastening accessories for fastening the shaft extension rigidly by the first end to the shaft of the fiber web processing element in a manner which transmits the rotating torque. At the first end, the shaft extension comprises a fastening element, which can be fitted with the shaft of the fiber web processing element, within each other, so that the fastening element and the shaft of the fiber web processing element form a circular installation gap between them, and the shaft extension comprises the first adjustment pieces, which can be fitted in the installation gap, and the adjustment pieces can be adjusted jointly or individually in order to change the radial size of the installation gap locally at each adjustment piece so that the shaft extension can be adjusted to become concentric with the axis of rotation of the shaft of the fiber web processing element and so that the installation gap can be filled with a fixing agent for joining the shaft extension and the shaft of the fiber web processing element together.

The shaft extension preferably comprises a flange part, which extends from the fastening element outward or inward in the radial direction. The shaft extension can be supported to the end of the shaft of the fiber web processing element by means of the flange part. The shaft extension can be adjusted to become concentric with the axis of rotation of the shaft of the fiber web processing element when the shaft extension is adjusted at the flange part to become concentric with the axis of rotation of the shaft of the fiber web processing element. The shaft of the fiber web processing element is preferably a drive shaft.

The flange part preferably comprises fastening accessories for fastening the flange part to the end of the shaft of the fiber web processing element so that the flange part can be adjusted in the radial direction. The flange part preferably comprises loose holes for screws installed at the end of the shaft of the fiber web processing element.

The flange part preferably comprises a dosing hole for the dosing of fixing agent into the installation gap from outside the shaft extension. The flange part is preferably equipped with a plug for closing the dosing hole.

The installation gap can be closed with the flange part toward one end of the shaft extension. When the installation gap is closed with the flange part, the fixing agent dosed into the installation gap does not come out of the installation gap toward one end of the shaft extension.

The flange part can be directed radially outward from the shaft extension when the fastening element is fastened to the internal hole in the shaft of the fiber web processing element. The flange part can be directed radially inward from the shaft extension when the fastening element is fastened externally around the shaft of the fiber web processing element.

The shaft extension preferably comprises a hollow space, which extends in the axial direction at least to the area of the fastening element. The hollow space in the shaft extension preferably goes through the shaft extension in the axial direction.

First adjustment pieces are preferably arranged at the first end of the shaft extension in order to adjust the first end of the shaft extension to become concentric with the axis of rotation of the shaft of the fiber web processing element.

The first adjustment pieces can preferably be adapted to a distance from the end of the shaft of the fiber web processing element. The first adjustment pieces can preferably be adapted to a distance from the flange part. There can be for example three or more of the first adjustment pieces, divided in the same cross-section of the fastening element.

The first adjustment piece preferably comprises a key part fitted in the installation gap for adjusting the radial size of the installation gap. The first adjustment piece preferably comprises an adjustment part for transmitting the adjustment force to the first adjustment piece.

The tightening direction of the key parts of the first adjustment pieces is preferably arranged in a direction from the second end of the shaft extension to the first end. In this case, when the shaft extension is being installed, for example before tightening the flange part to the shaft of the fiber web processing element for example by screw mounting, the flange part presses against the end of the shaft of the fiber web processing element as a result of the tightening motion of the key parts of the first adjustment pieces. The friction force created by the tightening motion of the key parts helps to keep the flange part in place in the radial direction.

The first adjustment pieces are preferably adjustable from outside the shaft extension when the shaft extension and the shaft of the fiber web processing element are fitted within each other. As an example, in a case where the fastening element is fitted inside the shaft of the fiber web processing element, the first adjustment pieces can be adjusted from outside the shaft extension by means of adjustment parts extending into the hollow space arranged inside the fastening element. In this case, the adjustment force influencing the first adjustment piece can be transmitted from outside the shaft extension by means of a tool extending into the hollow space. As an example, in a case where the fastening element surrounds the shaft of the fiber web processing element, the first adjustment pieces can be adjusted directly from outside the fastening element.

The shaft extension preferably comprises the first openings formed in the fastening element at the first end for the first adjustment pieces. The first openings preferably enable the adjustment movement of the adjustment pieces and that the adjustment pieces stay in the first openings, for example when moving the shaft extension before installation is complete. The adjustment part of the first adjustment piece is preferably adapted to go through the first opening so that the transmission of the adjustment force to the first adjustment piece is possible from outside the installation gap. The first adjustment piece is preferably adjustable through the hollow space of the shaft extension.

The flange part may comprise second adjustment pieces, which can be fitted in the circular installation gap and which can be adjusted jointly and/or individually in order to change the radial size of the installation gap locally at each adjustment piece so that the shaft extension can be adjusted to become concentric with the axis of rotation of the shaft of the fiber web processing element. The second adjustment pieces are preferably arranged close to the end of the shaft of the fiber web processing element. The flange part may comprise second openings for the installation of the second adjustment pieces. The second adjustment pieces can be fitted into the second openings which go through the flange part in the axial direction and which are arranged in the radial direction at the installation gap. There can be for example three or more of the second adjustment pieces. The second adjustment piece preferably comprises a key part fitted in the installation gap for adjusting the radial size of the installation gap. The second adjustment piece preferably comprises an adjustment part for transmitting the adjustment force to the second adjustment piece. The first adjustment pieces and/or the second adjustment pieces can preferably be moved in the axial direction.

According to a second aspect of the invention, the present invention provides a fiber web processing element, which comprises a shaft extension according to some aspect or embodiment of the invention.

According to a third aspect of the invention, the present invention provides a method for the fastening of the shaft extension to the shaft of a fiber web processing element, where the shaft extension comprises a first end for fastening to the shaft of the fiber web processing element and an opposite second end for a rotating device of the fiber web processing element, in which method the shaft extension is fastened rigidly by the first end to the shaft of the fiber web processing element in a manner which transmits the rotating torque. At the first end, the shaft extension comprises a fastening element, which is fitted with the shaft of the fiber web processing element, within each other, so that the fastening element and the shaft of the fiber web processing element form a circular installation gap between them, and the shaft extension comprises the first adjustment pieces, which are fitted in the installation gap and which are adjusted jointly or individually in order to change the radial size of the installation gap locally at each adjustment piece so that the shaft extension is adjusted to become concentric with the axis of rotation of the shaft of the fiber web processing element and so that the installation gap is filled with a fixing agent.

The fixing agent can be based on a metal, ceramic or epoxy, and/or the fixing agent can contain different fillers. The fixing agent is preferably of adhesive. The fixing agent preferably hardens at the temperature of the place of operation. The fixing agent does not preferably shrink substantially in the operating conditions, when the fixing agent hardens and dries. In some applications, the fixing agent can shrink or swell in a controlled manner. In some applications, the fixing agent may be such that it hardens at a certain temperature but softens at a temperature considerably higher than the operating temperature so that the joint between the shaft extension and the shaft of the fiber web processing element can be dismantled without breaking the components.

According to a fourth aspect of the invention, the present invention provides a method for the fastening of a roll drive (motor) to the end of a fiber web processing element, in particular to a shaft arranged at the end of a roll, by means of the shaft extension, which comprises a first end for fastening to the end of the fiber web processing element and an opposite second end for a rotating device of the fiber web processing element, in which method the shaft extension is fastened rigidly by the first end to the end of the fiber web processing element in a manner which transmits the rotating torque. At the first end, the shaft extension comprises a fastening element, which is fitted with the end of the fiber web processing element, within each other, so that the fastening element and the end form a circular installation gap between them, and the shaft extension comprises the first adjustment pieces, which are fitted in the installation gap and which are adjusted jointly or individually in order to change the radial size of the installation gap locally at each adjustment piece so that the shaft extension is adjusted to become concentric with the axis of rotation of the end of the fiber web processing element and so that the installation gap is filled with a fixing agent.

In some embodiments, a protective cover can be installed in the installation gap at the first end of the shaft extension to serve as a guard. This can be done to prevent corrosion. The access of steam, for example, into contact with the fixing agent and adjustment pieces can be prevented.

The invention has several advantages. Solutions according to certain aspects and embodiments can be used in particular in the modernisation projects of machines. Some applications can be used universally for fastening the shaft extension to the original shaft, which may be located in an arbitrary fiber web processing element, for example at a roll end or in a gear. The shaft extension can be fastened so that it is concentric with the shaft of the fiber web processing element, or even more universally, to a desired position relative to the shaft of the fiber web processing element. In some cases, the shaft extension can be fastened so that it is concentric with the original shaft but with a desired degree of shifted parallelism, for example due to balancing or to achieve a desired eccentricity effect. For example an electric motor equipped with a pipe shaft can be installed on the shaft extension to serve as the transmission drive for the roll. Vibrations, which are caused by the installation of the motor and which disturb the fiber web manufacturing process, can be avoided or at least significantly reduced during operation when the rotating torque of the roll is transmitted by means of the shaft extension, which rotates concentrically with the rotating motion of the roll, and an electric motor.

The position of the shaft extension can be adjusted during installation, because the shaft extension can be centered before making the rigid joint which has no clearance. The quality and dimensional accuracy of installation can therefore be ensured before the shaft extension is finally fastened to the original shaft.

The shaft extension can also be centered successfully and accurately to an eccentric surface of poor quality. The shaft of a fiber web processing element can be extended to an internal and external surface. The shaft extension can be installed in a cost-saving manner without removing the fiber web processing element, such as a roll, from the machine. Moreover, it is possible to avoid the dismantling of the roll and the transport of the roll or roll end for machining. Since the roll can remain installed in the machine during the extension of the shaft of the fiber web processing element, time is saved, and the production interruption can be considerably shorter than with conventional methods of extending a shaft.

The necessary components for the extension of the shaft of the fiber web processing element can be manufactured in advance at reasonable costs, and suitable shaft extensions with their installation accessories can be stored for future needs. In particular when modernizing rolls and when renewing motors, shaft extensions of a suitable size category can be manufactured in advance, which expedites the execution of a modernization project. It is possible to shorten the time it takes to extend the shaft of the fiber web processing element and for example the time it takes to install the motor on the shaft of the roll. The shaft extension requires considerably less dimensionally accurate and expensive machining work than prior art installation methods based on dimensionally accurate tolerances.

The embodiments of the present invention are described or have been described only in conjunction with some aspect or aspects of the invention. A professional in the field understands that any embodiment of any aspect of the invention can be applied in the same aspect and other aspects of the invention on its own or in combination with the other embodiments.

### BRIEF DESCRIPTION OF FIGURES

The invention is described below in way of example by making reference to the enclosed figures, where:
Figure 1 presents a preferred roll drive fitted to a shaft extension of a roll;
Figure 2 presents a shaft extension according to one embodiment, equipped with a flange part;
Figure 3 presents first adjustment pieces according to one embodiment, equipped with key parts and adjustment parts;
Figure 4 presents a tool for engaging the adjustment parts; and
Figure 5 presents a shaft extension, which is fitted to the shaft of a fiber web processing element.

### DETAILED SPECIFICATION

In the below specification, similar reference numbers refer to similar parts. It is to be noted that the figures presented are not completely on scale and that they primarily only serve the purpose of illustrating the embodiments of the invention.

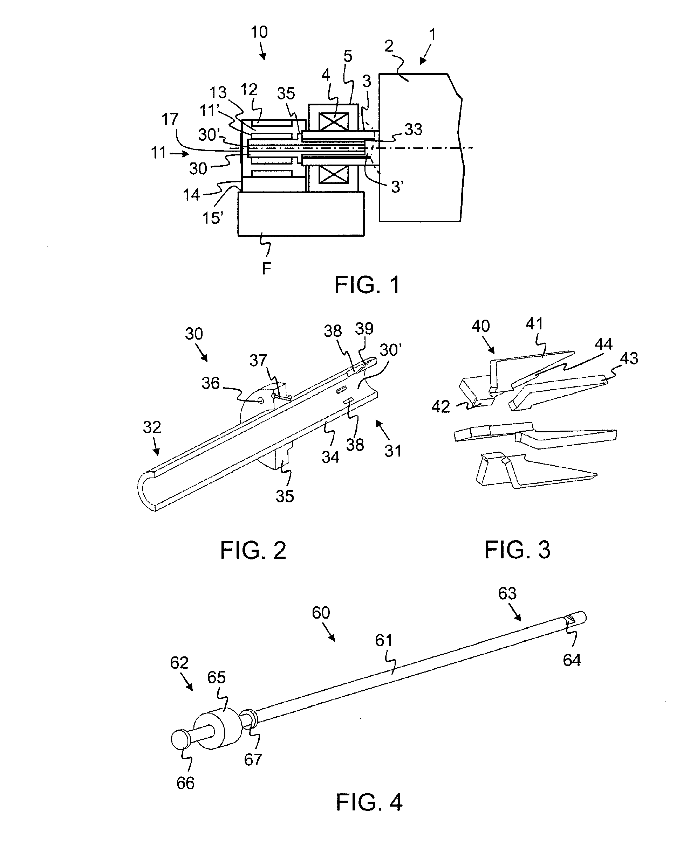

Figure 1 presents schematically a roll 1 according to certain preferred embodiments, with the roll 1 used as a fiber web processing element, and roll drive 10 (motor), which is used as a rotating device for the roll. The roll 1 comprises a shell part 2 and a shaft 3 fastened to the shell part at the end 2' of the roll 1 for example by means of a head flange, where the shaft 3 is supported to a bearing housing 5 by means of a bearing 4 so that the shaft 3 can rotate. The bearing housing 5 is supported stationarily to the device frame F.

The roll drive 10 comprises a rotor part 11 and a stator part 12, between which an air gap 13 required by the operation of the motor is created, when the rotor part 11 is supported to the inside of the stator part 12 so that the rotor part 11 can rotate.

The roll 1 can be assembled by installing the bearing housing 5 with its bearing 4 on the shaft 3, by installing or manufacturing permanent magnets 11' of the rotor part on the shaft extension 30, by fastening the shaft extension 30 to the shaft 3 outside the bearing housing 5 behind the bearing housing 5 when viewed from the direction of the shell part 2, and by installing the stator part 12 around the rotor part 11. The stator part 12 can be installed into place for example by fastening the stator frame 14 comprising the roll drive 10 into place around the rotor 11. Naturally, one feasible option is that the bearing housing 5 and the bearing 4 are installed over the fastened rotor part 11, if the dimensions of the bearing 4 allow it to be passed over the rotor 11 onto the shaft 3. According to a preferred embodiment, the outer diameter of the rotor 11, measured around the permanent magnets fastened on the shaft or shaft extension, is smaller than the inner diameter of the bearing 4 of the shaft of the roll.

The roll drive 10 comprises a stator frame 14, which is fastened to the device frame F at the fastening point 15' so that the stator frame 14 cannot rotate. The frame 14 can be fastened beside the bearing housing 5, preferably on the same device frame F as the bearing housing 5 of the roll 1. Instead of or in addition to the device frame, the frame 14 can also be fastened to the bearing housing 5. The frame 14 may comprise a stand by means of which the above-mentioned fastening can be carried out. The frame 14 is arranged to be stationary relative to the bearing 4. The stator part 12 is fastened to the frame 14 and supported to be stationary relative to the bearing 4.

The shaft extension 30 is fastened in a non-rotating manner by its first end to the end of and inside the shaft 3, which is used as the drive shaft of the roll 1. The shaft extension and the drive shaft form a circular installation gap 33 between them. The rotor part 11 comprises permanent magnets 11' of the rotor mounted around the second end of the shaft extension 30. The shaft extension 30 comprises the flange part 35 between the first and second ends, with the flange part 35 fitted against the end of the shaft 3. The shaft extension is equipped with a center hole 30', in other words the shaft extension is hollow. The permanent magnets 11' can be manufactured directly on the shaft extension 30.

The rotor part 11 is supported relative to the stator part 12 so that the rotor part 11 can rotate by means of the shaft extension 30 equipped with the hole 30', the shaft 3 equipped with a hole 3', and the bearing 4 of the shaft. The rotor 11 and stator 12 are not mounted to each other or to the frame 14 with bearings. The bearing of the rotor part 11 is not needed inside the frame 14 in the drive.

According to certain embodiments, the frame 14 of the roll drive 10 comprises an opening 17, which may be equipped with a door. The opening 17 can be used for example for maintenance and inspections, or the shaft 3 or shaft extension 30 can be brought through it.

Figure 2 presents a longitudinal section of the shaft extension 30, which comprises the first end 31 for fastening to the shaft 3 and an opposite second end 32 for a rotating device of the fiber web processing element. At the first end, the shaft extension comprises a fastening element 34, which can be fitted with the shaft 3, within each other, so that the fastening element and the shaft form a circular installation gap 33 between them. The shaft extension 30 comprises a hollow space 30', which extends in the axial direction through the shaft extension.

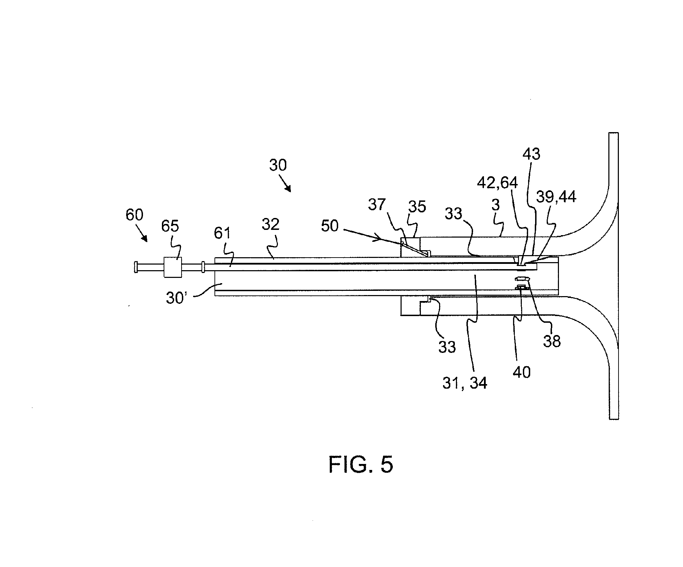

The shaft extension 30 comprises a flange part 35, which extends in the figures presented from the fastening element 34 outward in the radial direction. In Figures 1 and 5, the shaft extension is supported to the end of the shaft 3 by the flange part 35. In order to adjust the shaft extension to become concentric with the axis of rotation of the shaft 3, the position of the shaft extension is adjusted at the flange part 35 relative to the end of the shaft 3. The adjustment can be carried out for example using a dial indicator on the outer track of the flange part 35 or on the cylindrical surface of the second end 32 of the shaft extension 30 at the flange part, and by rotating the shaft 3 on its bearings. The flange part can be tightened against the end of the shaft 3 for example by means of screws which are fitted in the holes 36 formed in the flange part 35. The holes 36 can be loose so that the flange part 35 can be moved in a suitably tightened state relative to the end of the shaft 3, for example by hitting gently with a hammer.

The flange part 35 comprises a dosing hole 37 for the dosing of fixing agent into the installation gap 33 from outside the shaft extension. The dosing hole preferably leads from the outside through the flange part 35 in an inclined position relative to the center axis of the shaft extension, and ends at the installation gap. The dosing hole 37 can be closed for example with a threaded plug.

First openings 38 have been arranged at the first end 31 of the shaft extension 30 for the first adjustment pieces 40 presented in Figure 3. The first openings enable the adjustment movement of the adjustment pieces and that the adjustment pieces stay in the first openings, for example when moving the shaft extension before installation is complete. The first openings 38 are arranged at a distance from the end of the shaft 3 and from the flange part 35. The shape of the first opening 38 preferably corresponds functionally to the shape of the adjustment piece 40. As an example, a key shape 41 formed in the adjustment piece 40, especially surface 44, is preferably arranged to work together with the surface 39 of the first opening 38, where the surface 39 is correspondingly inclined. The shaft extension 30 can be centered by adjusting the shaft extension so that it has no run-out. This can be done by the flange part and also at another point, which is at the adjustment pieces. The first openings 38 enable the transmission of the adjustment force to the adjustment pieces 40 from outside the installation gap 33, and in the case of a hollow shaft extension 30 presented in Figure 2, the first adjustment pieces 40 can be adjusted through the hollow space 30' of the shaft extension.

Figure 3 presents the first adjustment pieces 40, which can be fitted in the installation gap 33 and which can be moved in the axial direction. The adjustment pieces can be adjusted jointly or individually in order to change the radial size of the installation gap 33 locally at each adjustment piece. In this way, the shaft extension can be adjusted to become concentric with the axis of rotation of the shaft 3, and after this the installation gap 33 can be filled with a fixing agent 50. In Figure 3, the first adjustment piece 40 comprises a key part 41, which can be fitted in the installation gap 33 for adjusting the radial size of the installation gap, and an adjustment part 42 in transmission contact with the key part 41. Reference number 43 denotes a key part 41 surface fitted against the shaft 3, where the surface can be a straight surface or a cylindrical surface, which preferably corresponds to the cylindricity of the surface of the shaft 3. Reference number 44 denotes a key surface fitted against the fastening element 34 of the key part 41.

Figure 4 presents a tool 60 for engaging the adjustment parts 42 of the adjustment pieces 40. The adjustment force influencing the first adjustment piece 40 can be transmitted from outside the shaft extension by means of the tool 60 which extends into the hollow space 30'. The tool 60 comprises an arm 61, which comprises the first end 62 for the user and the second end 63 for engaging the adjustment part 42. At the second end of the arm, the tool 60 comprises a simple grip profile 64, which is adapted with the shape of the adjustment part 42 so that when engaged with the adjustment part 42, the grip shape 64 allows the adjustment part 42 to be moved (axially) in the direction of the adjustment force. The grip profile 64 can be attached to and detached from the adjustment part for the adjustment movement by means of a movement in the transverse direction. The second end 63 of the arm is dimensioned so that the adjustment parts 42 can be engaged alternately inside the hollow space 30' of the shaft extension 30. When the fastening element 34 is inside the shaft 3, the first adjustment pieces 40 can be adjusted directly from outside the fastening element through the hollow space 30'. The first end 62 of the arm 61 comprises a mass 65 which is fitted in a movable manner around the arm over a limited movement. The movement of the mass 65 is limited by the first stopper 66 and the second stopper 67, which are fastened to the arm 61. There is therefore a percussion hammer at the first end 62 of the arm 61, by means of which percussion hammer an axial adjustment force affecting the adjustment piece 40 can be accomplished.

Figure 5 is a more detailed presentation than Figure 1 of the shaft extension 30 fitted inside the shaft 3. When the fastening element 34 of the shaft extension 30 is fitted inside the shaft 3 and the flange part 35 is fitted against the end of the shaft 3, the key parts 41 in the first adjustment pieces 40 can be adjusted by means of the adjustment parts 42, which extend into the hollow space 30' arranged inside the fastening element 34, from outside the shaft extension 30. The first adjustment pieces 40 can be adjusted using the tool 60 in the manner described in conjunction with Figure 5. The tightening direction of the key parts 41 of the first adjustment pieces 40 is preferably arranged in a direction from the second end 32 of the shaft extension to the first end 31. In this case, when the shaft extension is being installed, for example before tightening the flange part 35 to the shaft 3 for example by screw mounting 36, the flange part presses against the end of the shaft 3 as a result of the axial motion of the key parts of the first adjustment pieces. The friction force created by the motion of the key parts helps to keep the flange part in place against the end of the shaft 3 in the radial direction. After the shaft extension 30 has been adjusted so that it has no run-out at the flange part 35 and after the flange part has been tightened to the end of the shaft 3, the adjustment pieces at the first end 31 of the shaft extension 30 can be adjusted in stages. In this case, the roll is rotated further and the run-out at the second end 32 of the shaft extension is ascertained by means of a dial indicator. The measured run-out can be eliminated or at least reduced down to the desired tolerance by adjusting the first adjustment pieces 40. The key parts 41 in the adjustment pieces are left in the tightened state in conjunction with the adjustment in stages and rotation of the roll after the measurement, when the measurement result is sufficient and the run-out is minor, or when no run-out can be found by means of measurement. After this, the installation gap 33 is filled by dosing fixing agent 50 for example through the dosing hole 37 in the flange part. Fixing agent 50 is dosed as far as possible and over an as large area as possible in the installation gap so that the adjustment pieces 40 are also locked into place. After this, the hardening fixing agent renders the connection rigid and one which transmits the rotating torque. Especially rough cast surfaces and machined surfaces are good bond surfaces for the fixing agent 50.

In the method for the fastening of the shaft extension 30 to the shaft 3 of the roll 1, where the shaft extension comprises a first end 31 for fastening to the shaft 3 and an opposite second end 32 for a rotating device of the fiber web processing element, the shaft extension is fastened rigidly by the first end to the shaft 3 in a manner which transmits the rotating torque. At the first end, the shaft extension 30 comprises a fastening element 34, which is fitted with the shaft 3, within each other, so that the fastening element and the shaft form a circular installation gap 33 between them, and the shaft extension comprises the first adjustment pieces 40, which are fitted in the installation gap and which are adjusted jointly or individually in order to change the radial size of the installation gap locally at each adjustment piece so that the shaft extension is adjusted to become concentric with the axis of rotation of the shaft 3 and so that the installation gap is filled with a fixing agent 50.

The fixing agent 50 can be based on a metal, ceramic or epoxy, and/or the fixing agent can contain different fillers. The fixing agent is preferably of adhesive.

The above specification provides non-limiting examples of some embodiments of the invention. It is clear for a professional in the field that the invention is not limited to the details presented, but the invention can also be implemented using other equivalent methods. Some features of the presented embodiments can be utilized without the use of the other features.

The above specification as such must only be considered as a description of the principles of the invention, not as a description limiting the invention. The scope of protection of the invention is hence only limited by the enclosed patent claims.

The invention relates to a shaft extension (30) for the shaft (3) of a fiber web processing element, where the shaft extension comprises a first end (31) for fastening to the shaft of the fiber web processing element and an opposite second end (32) for a rotating device of the fiber web processing element, and fastening accessories for fastening the shaft extension rigidly by the first end to the shaft in a manner which transmits the rotating torque. At the first end (31), the shaft extension (30) comprises a fastening element (34), which can be fitted with the shaft (3) of the fiber web processing element, within each other, so that the fastening element and the shaft of the fiber web processing element form a circular installation gap (33) between them, and the shaft extension comprises (30) the first adjustment pieces (40), which can be fitted in the installation gap, and the adjustment pieces can be adjusted jointly or individually in order to change the radial size of the installation gap locally at each adjustment piece so that the shaft extension can be adjusted to become concentric with the axis of rotation of the shaft of the fiber web processing element and so that the installation gap can be filled with a fixing agent (50) for joining the shaft extension and the shaft of the fiber web processing element together. The invention also relates to a fiber web processing element, to a method for the fastening of the shaft extension (30) to the shaft (3) of the fiber web processing element, and to a method for the fastening of a roll drive (10) to the end (2') of the fiber web processing element (1), such as a roll, by means of the shaft extension (30).

## Claims

1. A shaft extension (30) for the shaft (3) of a fiber web processing element, where the shaft extension comprises a first end (31) for fastening to the shaft of the fiber web processing element and an opposite second end (32) for a rotating device of the fiber web processing element and fastening accessories for fastening the shaft extension rigidly by the first end to the shaft in a manner which transmits the rotating torque, **characterized in that** at the first end (31) the shaft extension (30) comprises a fastening element (34), which can be fitted with the shaft (3) of the fiber web processing element, within each other, so that the fastening element and the shaft of the fiber web processing element form a circular installation gap (33) between them, and the shaft extension (30) comprises the first adjustment pieces (40), which can be fitted in the installation gap, and the adjustment pieces can be adjusted jointly or individually in order to change the radial size of the installation gap locally at each adjustment piece so that the shaft extension can be adjusted to become concentric with the axis of rotation of the shaft of the fiber web processing element and so that the installation gap can be filled with a fixing agent (50) for joining the shaft extension and the shaft of the fiber web processing element together.

2. A shaft extension as claimed in claim 1, **characterized in that** the shaft extension (30) comprises a flange part (35), which extends from the fastening element outward or inward in the radial direction.

3. A shaft extension as claimed in claim 2, **characterized in that** the flange part (35) comprises fastening accessories for fastening the flange part to the end of the shaft (3) of the fiber web processing element so that the flange part can be adjusted in the radial direction.

4. A shaft extension as claimed in any of the claims 1 to 3, **characterized in that** the shaft extension (30) comprises a hollow space (30'), which extends in the axial direction at least to the area of the fastening element (34).

5. A shaft extension as claimed in any of the claims 1 to 4, **characterized in that** the shaft extension (30) comprises the first openings (38) formed in the fastening element (34) at the first end (31) for the first adjustment pieces (40).

6. A shaft extension as claimed in any of the claims 1 to 5, **characterized in that** the first adjustment piece (40) comprises a key part (41) fitted in the installation gap (33) for adjusting the radial size of the installation gap.

7. A shaft extension as claimed in any of the claims 1 to 6, **characterized in that** the first adjustment piece (40) comprises an adjustment part (42) for transmitting the adjustment force to the first adjustment piece.

8. A shaft extension as claimed in any of the claims 1 to 7, **characterized in that** the adjustment part (42) of the first adjustment piece (40) is adapted to go through the first opening (38) so that the transmission of the adjustment force to the first adjustment piece is possible from outside the installation gap (33).

9. A shaft extension as claimed in any of the claims 1 to 8, **characterized in that** the first adjustment piece (40) can be adjusted through the hollow space (30') in the shaft extension (30).

10. A shaft extension as claimed in any of the claims 1 to 9, **characterized in that** the shaft extension (30) comprises a flange part (35), which comprises a dosing hole (37) for the dosing of fixing agent (50) into the installation gap (33) from outside the shaft extension.

11. A fiber web processing element, which comprises a shaft extension (30) as claimed in any of the claims 1 to 10.

12. A method for the fastening of a shaft extension (30) to the shaft (3) of a fiber web processing element, where the shaft extension comprises a first end (31) for fastening to the shaft of the fiber web processing element and an opposite second end (32) for a rotating device of the fiber web processing element, in which method the shaft extension is fastened rigidly by the first end to the drive shaft in a manner which transmits the rotating torque, **characterized in that** at the first end (31) the shaft extension (30) comprises a fastening element (34), which is fitted with the shaft (3) of the fiber web processing element, within each other, so that the fastening element and the drive shaft form a circular installation gap (33) between them, and the shaft extension (30) comprises the first adjustment pieces (40), which are fitted in the installation gap and which are adjusted jointly or individually in order to change the radial size of the installation gap locally at each adjustment piece so that the shaft extension is adjusted to become concentric with the axis of rotation of the drive shaft and so that the installation gap is filled with a fixing agent (50).

13. A method as claimed in claim 12, **characterized in that** the fixing agent chosen can be based on a metal, ceramic or epoxy, and/or the fixing agent can contain different fillers.

14. A method for the fastening of a roll drive (10) to the end (2') of a fiber web processing element (1), in particular to a shaft (3) arranged at the end of a roll, by means of the shaft extension (30), which comprises a first end (31) for fastening to the end of the fiber web processing element and an opposite second end (32) for a rotating device of the fiber web processing element, in which method the shaft extension is fastened rigidly by the first end to the end of the fiber web processing element in a manner which transmits the rotating torque, **characterized in that** at the first end (31) the shaft extension (30) comprises a fastening element (34), which is fitted with the end (2') of the fiber web processing element (1), within each other, so that the fastening element and the end form a circular installation gap (33) between them, and the shaft extension (30) comprises the first adjustment pieces (40), which are fitted in the installation gap and which are adjusted jointly or individually in order to change the radial size of the installation gap locally at each adjustment piece so that the shaft extension is adjusted to become concentric with the axis of rotation of the end of the fiber web processing element and so that the installation gap is filled with a fixing agent (50).
